# EUROPÄISCHE PATENTSCHRIFT

(11) **EP 0 669 217 B1**
(45) Veröffentlichungstag und Bekanntmachung des Hinweises auf die Patenterteilung: **30.10.1996**
(21) Anmeldenummer: 94102833.4
(22) Anmeldetag: 24.02.1994
(51) Int. Cl.: B60H 1/00

(54) **Heiz- bzw. Klimagerät für ein Kraftfahrzeug mit einem Bediengerät**
Heating or air conditioning device for a motor vehicle with an operating apparatus
Appareil de chauffage ou de climatisation pour véhicule automobile avec un appareil de commande

(43) Veröffentlichungstag der Anmeldung: 30.08.1995
(73) Patentinhaber: Valeo Klimasysteme GmbH, 96476 Rodach (DE)
(72) Erfinder: Schwarz, Stefan, Dipl.-Ing. (FH), D-96450 Coburg (DE)
(74) Vertreter: COHAUSZ HASE DAWIDOWICZ & PARTNER

(56) Entgegenhaltungen:
- EP-A- 0 170 107
- EP-A- 0 397 899
- DE-A- 3 914 627
- FR-A- 2 693 284

## Beschreibung

Die Erfindung bezieht sich auf ein Heiz- bzw. Klimagerät für ein Kraftfahrzeug mit einem Bediengerät gemäß Patentanspruch 1.

Bediengerate dienen üblicherweise dazu, um armaturenbrettseitig mittels verschiedener Bedienknöpfe insbesondere die Luft in unterschiedlicher Ausströmungsebenen zu verteilen, eine bestimmte Temperatur einzustellen bzw. die Drehzahl und damit die Fördermenge eines Luftventilators zu verändern. Bekannte Bediengeräte weisen dazu in der Regel einen Grundkörper mit einer armaturbrettseitigen Trägerplatte und einer davorliegenden, Einstellsymbole aufnehmenden Frontblende auf, die vorzugsweise als Kunststoff-Spritzgußteil bzw. Kunststoffpreßteil geformt ist. Vor der Vorderseite der Frontblende sind die Bedienknöpfe angeordnet, die mit einer rückseitigen Bedienwelle durch die Frontblende und die Trägerplatte reichen und mit Abtriebsmitteln direkt oder indirekt gekoppelt sind, die zu den einzelnen Einstellelementen, insbesondere der Luftverteilung, der Temperatureinstellung bzw. der Ventilatoreinstellung führen. Es ist z.B. durch die EP-B1-0 397 899 bekannt, zur verstellbaren Arretierung der Bedienknöpfe deren Drehwelle in der Trägerplatte zu lagern und den Drehknopf auf das zur Vorderseite der Frontblende führende Drehwellenende berührungsfrei zur Frontblende aufzustecken.

Gemaß Aufgabe vorliegender Erfindung soll ein Heiz- bzw. Klimagerät für ein Kraftfahrzeug mit einem flachbauenden und mit einfachen Mitteln trotz notwendigem Ausgleich von Fertigungs- und Montagetoleranzen eine Leichtgängigkeit gewährleistende Bedienknopfbetätigung in einem Bediengerät geschaffen werden. Die Lösung dieser Aufgabe gelingt durch die Lehre des Anspruchs 1; vorteilhafte Ausgestaltungen der Erfindung sind jeweils Gegenstand der Unteransprüche.

Durch die direkte drehbare Lagerung des Bedienknopfes in der Frontblende werden Toleranzadditionen zwischen der im bekannten Fall für die Aufnahme des Drehknopfes vorgesehenen Trägerplatte vermieden und der Drehknopf kann in dichterem axialen Abstand zur Frontblende bzw. Trägerplatte montiert werden, ohne daß eine zu gewährleistende Leichtgänigkeit in Frage gestellt ist. Im Falle einer rein elektrischen Betätigung der Einstellorgane und somit bei vorteilhaftem Verzicht auf nachgeschaltete mechanische Übertragungsmittel kann auf eine Trägerplatte überhaupt verzichtet werden.

In fertigigungs- und montagetechnisch günstiger und gleichzeitig eine leichtgängige Bedienung gewährleistender Weise sind der Bedienknopf gegen die Vorderseite der Frontblende mit Gleitanlage axial abgestützt und die vorzugsweise mit dem Bedienknopf einstückige Bedienwelle durch eine Lageröffnung der Frontblende durchgesteckt und auf der Rückseite der Frontblende mit einer mit Gleitanlage gegen die Frontblende axial abgestutzte Gegenscheibe im Sinne zumindest einer axialen Halterung und tangentialen Mitnahme verbunden, insbesondere in Steckrichtung verrastet.

Die Bedienwelle des Bedienknopfes ist zewckmäßigerweise hülsenförmig ausgebildet und mit vom Hülsenrand vorstehenden Arretierungs- bzw. Mitnahme-Nasen in korrespondierende Arretierungs- bzw. Mitnahme-Öffnungen der Gegenscheibe im Sinne einer axialen Arretierung bzw. tangentialen Drehnahme eingesteckt. Zum axial kurzbauenden Toleranzausgleich und gleichzeitig zur vorteilhaften Gleitanlage der Gegenscheibe gegen die Rückseite der Frontblende weist die vorzugsweise aus Kunststoff gefertigte Gegenscheibe einstückig angeformte, axial gegen die Rückseite der Frontblende vorstehende und an dieser elastisch gleitend andrückende Federzungen auf.

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert; darin zeigen:
- FIG 1: in einem Teilausschnitt die Draufsicht auf die Vorderseite eines Bediengerätes mit einem erfindungsgemäß in der Frontblende gelagerten Drehknopf zur Einstellung der Ventilatordrehzahl;
- FIG 2: die Anordnung gemäß FIG 1 im Schnitt II-II;
- FIG 3: die rückseitige Ansicht auf die Anordnung gemäß FIG 1;
- FIG 4: die Draufsicht auf die Vorderseite eines bekannten Bediengerätes mit drei Drehknöpfen zur Einstellung der Ventilatordrehzahl, der Temperatur bzw. der Luftverteilung;
- FIG 5: die Anordnung gemäß FIG 4 im Schnitt V-V mit einer bekannten Drehknopflagerung in der Trägerplatte eines Grundrahmens.

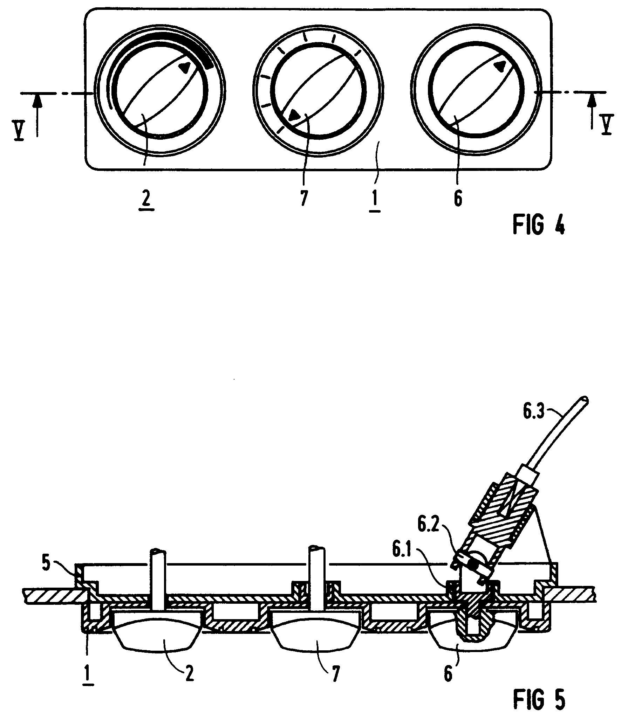

FIG 4,5 zeigen ein bekanntes Bediengerät mit jeweils einem Drehknopf 2 zur Einstellung der Ventilatorgeschwindigkeit und damit der geförderten Luftmenge, einem Drehknopf 6 zur Einstellung der Luftverteilung in verschiedene Einströmungsebenen des Innenraums des Fahrzeuges und einem Einstellknopf 7 für die Temperatur, z.B. durch Verstellung einer Mischluftklappe eines luftseitig steuer- bzw. regelbaren Heizgerätes.

FIG 5 zeigt im einzelnen die bekannte Lagerung eines Drehknopfes innerhalb der Trägerplatte 5 anhand des Drehknopfes 6 zur Einstellung von Luftverteilungsklappen; dazu ist das einstellungsseitige Gelenk eines Kreuzgelenkes 6.2 mittels einer Bedienwellenhalterung 6.1 in einer Trägerplatte 5 axial und radial geführt drehbar gelagert. Auf die Bedienwellen-Halterung 6.1 ist der Drehknopf 6 in axialem Abstand berührungsfrei zu der an der Vorderseite der Trägerplatte 5 gehaltenen Frontblende 1 aufgesteckt. Mit dem abtriebsseitigen Gelenk des Kreuzgelenkes 6.2 ist eine Bowdenzugwelle 6.3 verbunden, die zu einer Luftverteilvorrichtung in dem Heiz- bzw. Klimagerät führt.

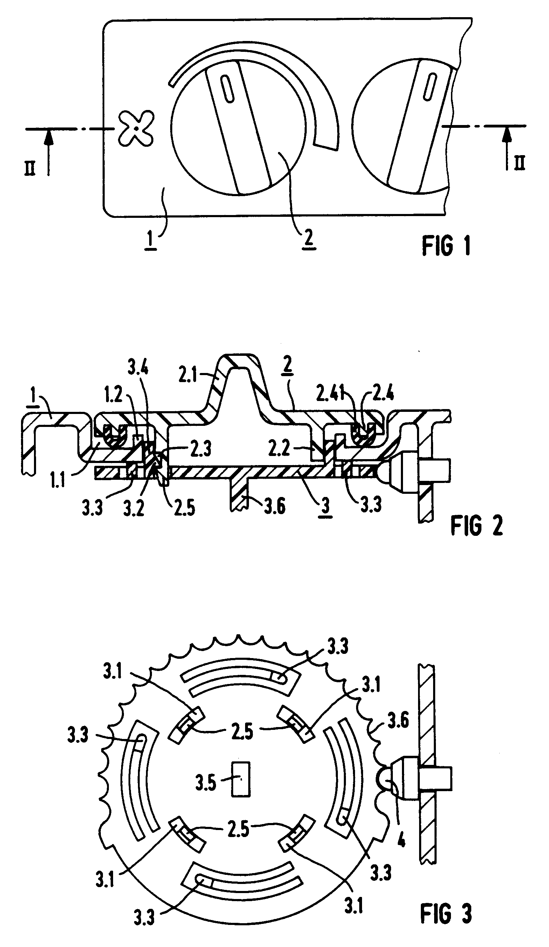

FIG 1 bis 3 zeigen im Unterschied zu der Lagerung der Bedienwelle des Drehknopfes 6 in einer Trägerplatte 5 gemäß FIG 5 die erfindungsgemäße Lagerung eines, hier zur Verstellung der Drehzahl des Ventilators vorgesehenen, Drehknopfes 2 in einer topfförmig eingeformten Drehknopf-Aufnahme 1.1 einer Frontblende 1.

Zur einfachen und axial kurzbauenden drehbaren Aufnahme des Drehknopfes 2 in der Frontblende 1 ist der Drehknopf 2 an seiner einem Handgriff 2.1 abgewandten Rückseite mit einer vorteilhaft hülsenförmig ausgebildeten und einstückig angeformten Drehwelle 2.2 durch axiales Einstecken mit einer Gegenscheibe 3 in axialer Richtung verrastbar, die an der Unterseite der Frontblende 1 axial abgestützt und radial geführt gleitend anliegt.

Im Sinne einer mit tangentialem Spiel behafteten Drehmitnahme zwischen dem Drehknopf 2 und der Gegenscheibe 3 weist die hülsenförmige Drehwelle 2.2 über ihren Umfang verteilt Arretierungs- bzw. Mitnahme-Nasen 2.5 auf, die in korrespondierende, in ihrer tangentialen Erstreckung gegenüber der tangentialen Erstreckung der Arretierungs- bzw. Mitnahme-Nasen 2.5 vergrößerten Einstecköffnungen 3.1 ein- bzw. durchgesteckt sind. Zur Ankopplung z.B. eines Potentiometers zur Drehzahleinstellung des Ventilators ist an die Abtriebsseite der Gegenscheibe 3 ein Drehwellenabtrieb 3.5 zur Einstellübertragung zwischen dem Drehknopf 2 einerseits und dem zur verstellenden Geschwindigkeitseinsteller des Ventilators andererseits angeformt. Falls eine mechanische Einstellübertragung, z.B. eine Exzenterankopplung eines Bowdenzuges oder Hebelantriebes vorgesehen ist, kann zweckmäßigerweise die Unterseite der Gegenscheibe 3 mit Führungsbahnen für eine Kniehebelübertragung versehen sein, die selbst in einer dann hinter der Frontblende anzuordnenden Trägerplatte gelagert ist; in jedem Fall bleibt die Lagerung des Drehknopfes 2 erfindungsgemäß frei von einer toleranzabhängigen Lagerabstützung relativ zu der Trägerplatte.

Nach einer Ausgestaltung der Erfindung ist der Drehknopf 2 mittelbar über die Gegenscheibe 3 radial geführt in der Frontblende 1 drehbar gelagert; dazu liegt die Gegenscheibe 3 mit einem axial vorstehenden Gleitrand 3.4 außenumfangsseitig gegen die Begrenzung der Lageröffnung 1.2 der Frontblende 1 an.

Zum Ausgleich eines fertigungs- bzw. montagetechnisch bedingten Axialspiels und gleitenden Anlage ist die Gegenscheibe 3 axial federnd gegen die Unterseite der Frontblende 1 abgestützt, wozu zweckmäßigerweise einstückig an die aus Kunststoff gefertigte Gegenscheibe 3 axial gegen die Unterseite der Frontblende 1 vorstehende, über den Umfang der Gleitfläche der Gegenscheibe 3 verteilte, gleitend an der Unterseite der Frontblende 1 anliegende Federzungen 3.3 angespritzt sind.

Zur weiteren Verbesserung einer leichtgängigen Verstellbarkeit des Drehknopfes 2 weist dieser einen axial gegenüber der Vorderseite der Frontblende 1 vorstehenden Gleitring 2.4 auf, auf dem zur zusätzlichen Verbesserung eine mit besonders guten Gleiteigenschaften ausgestattete Gleitauflage 2.41 aufgesetzt sein kann. Zweckmäßigerweise werden der Drehknopf 2 und die Gegenscheibe 3 bzw. speziell der Gleitrand 3.4 der Gegenscheibe 3 bzw. der Gleitring 2.4 bzw. dessen Gleitauflage 2.41 aus Kunststoff mit einem guten Gleitkoeffizienten gefertigt.

Zum Zwecke einer Grob-bzw. Feinrasterung für verschiedene arretierbare Einstellungen des Drehknopfes 2 ist in weiterer Ausgestaltung der Erfindung über den Einstellumfang der Gegenscheibe 3, insbesondere an ihrem Außenumfang, eine Einstell-Rasterung 3.6 vorgesehen, in die ein Rastnocken 4 unter Federspannung derart einschnappt, daß einerseits eine rasterweise Verstellung über die Raststellungen möglich ist jedoch andererseits bei Erreichen einer bestimmten Einstellung diese Lage jeweils selbsthaltend fixierbar ist.

## Patentansprüche

1. Heiz- bzw. Klimagerät für ein Kraftfahrzeug mit einem Bediengerät, enthaltend zumindest einen Bedienknopf, insbesondere einen Drehknopf (2), dessen rückseitige Bedienwelle, insbesondere Drehwelle (2.2), durch eine Öffnung einer Frontblende (1) reicht, mit dem Merkmal:
a) Der Bedienknopf (2) ist in der Frontblende (1) radial und axial geführt gelagert.

2. Heiz- bzw. Klimagerät nach Anspruch 1 mit dem Merkmal:
b) Der Bedienknopf (2) ist gegen die Vorderseite der Frontblende (1) mit Gleitanlage axial abgestützt;
c) die vorzugsweise mit dem Bedienknopf (2) einstückige Bedienwelle (2.2) ist durch eine Lageröffnung (1.2) der Frontblende (1) durchgesteckt und auf der Rückseite der Frontblende (1) mit einer mit Gleitanlage gegen die Rückseite der Frontblende (1) axial abgestützte Gegenscheibe (3) im Sinne zumindest einer axialen Halterung und tangentialen Mitnahme verbunden.

3. Heiz- bzw. Klimagerät nach Anspruch 2 mit dem Merkmal:
d) Die Bedienwelle (2.2) des Bedienknopfes (2) ist in axialer Steckrichtung mit der Gegenscheibe (3) verrastet.

4. Heiz- bzw. Klimagerät nach Anspruch 3 mit dem Merkmal:
e) Die Bedienwelle (2.2) des Bedienknopfes (2) ist hülsenförmig ausgebildet und ist mit vom Hülsenrand vorstehenden Arretierungs- bzw. Mitnahme-Nasen (2.5) in korrespondierende Einstecköffnungen (3.1) der Gegenscheibe (3) im Sinne einer axialen Arretierung bzw. tangentialen Drehmitnahme eingesteckt.

5. Heiz- bzw. Klimagerät nach einem der Ansprüche 1-4, insbesondere nach Anspruch 4 mit dem Merkmal:
f) Die Bedienwelle (2.2) des Bedienknopfes (2) steht mit tangentialem Spiel in Drehmitnahme mit der Gegenscheibe (3).

6. Heiz- bzw. Klimagerät nach zumindest einem der Ansprüche 1-5 mit dem Merkmal:
g) Der Bedienknopf (2) ist mittelbar über die Gegenscheibe (3) radial geführt in der Frontblende (1) drehbar gelagert;
h) die Gegenscheibe (3) liegt mit einem axial vorstehenden Gleitrand (3.4) außenumfangsseitig gegen die Begrenzung der Lageröffnung (1.2) der Frontblende (1) an.

7. Heiz- bzw. Klimagerät nach zumindest einem der Ansprüche 1-6 mit dem Merkmal:
i) Der Bedienknopf (2) ist relativ zu der Gegenscheibe (3) toleranzausgleichend axial federnd abgestützt.

8. Heiz- bzw. Klimagerät nach Anspruch 7 mit dem Merkmal:
j) Die vorzugsweise aus Kunststoff gefertigte Gegenscheibe (3) weist einstückig angeformte, axial gegen die Rückseite der Frontblende (1) vorstehende und an diese elastisch andrückende und gleitend anliegende Federzungen (3.3) auf.

9. Heiz- bzw. Klimagerät nach zumindest einem der Ansprüche 1-8 mit dem Merkmal:
k) Der Bedienknopf (2) liegt mit einem axial vorstehenden, insbesondere mit einer Gleitauflage (2.41) versehenen, Gleitring (2.4) gegen die Vorderseite der Frontblende (1) an.

10. Heiz- bzw. Klimagerät nach zumindest einem der Ansprüche 1-9 mit dem Merkmal:
l) Die Gegenscheibe (3) ist mit einer in Verstellrichtung verlaufenden Einstell-Rastung (3.6) versehen, in die eine diese sichernde Rastarretierung, insbesondere ein federnder Rastnocken (4), einschnappt.

## Claims

1. A heating and respectively an air conditioning device for a motor vehicle having an operating apparatus, containing at least one control knob, in particular a rotary knob (2), the rear control shaft of which, in particular the rotary shaft (2.2), extends through an opening in a front panel (1), having the feature:
a) The control knob (2) is mounted with radial and axial guidance in the front panel (1).

2. A heating and respectively an air conditioning device according to Claim 1 having the feature:
b) The control knob (2) is axially supported with sliding abutment against the front side of the front panel (1);
c) the control shaft (2.2), which is preferably in one piece with the control knob (2), is passed through a storage opening (1.2) in the front panel (1) and on the rear of the front panel (1) is connected to a counter-disk (3) axially supported with sliding abutment against the rear of the front panel (1) in the sense of at least an axial mounting and tangential entrainment.

3. A heating and respectively an air conditioning device according to Claim 2 having the feature:
d) The control shaft (2.2) of the control knob (2) is locked in the axial direction of insertion with the counter-disk (3).

4. A heating and respectively an air conditioning device according to Claim 3 having the feature:
e) The control shaft (2.2) of the control knob (2) has a sleeve-shaped construction and is inserted with catching and respectively entrainment lugs (2.5) protruding from the sleeve edge into corresponding insertion openings (3.1) in the counter-disk (3) in the sense of an axial catch or tangential rotational entrainment.

5. A heating and respectively an air conditioning device according to one of Claims 1-4, in particular Claim 4, having the feature:
f) The control shaft (2.2) of the control knob (2) is in rotational entrainment with the counter-disk (3) with tangential clearance.

6. A heating and respectively an air conditioning device according to at least one of Claims 1-5 having the feature:
g) The control knob (2) is indirectly rotatably mounted with radial guidance in the front panel (1) via the counter-disk (3);
h) the counter-disk (3) abuts with an axially protruding sliding edge (3.4) at the outer periphery against the boundary of the storage opening (1.2) of the front panel (1).

7. A heating and respectively an air conditioning device according to at least one of Claims 1-6 having the feature:
i) The control knob (2) is axially resiliently supported relative to the counter-disk (3) in a manner compensating for tolerances.

8. A heating and respectively an air conditioning device according to Claim 7 having the feature:
j) The counter-disk (3) preferably manufactured from plastics comprises spring tongues (3.3) which are moulded on in one piece, protrude axially towards the rear of the front panel (1) and press elastically and slidingly abut thereagainst.

9. A heating and respectively an air conditioning device according to at least one of Claims 1-8 having the feature:
k) The control knob (2) abuts against the front side of the front panel (1) with an axially protruding slide ring (2.4), provided in particular with a slide support (2.41).

10. A heating and respectively an air conditioning device according to at least one of Claims 1-9 having the feature:
l) The counter-disk (3) is provided with an adjustable locking device (3.6) extending in the adjustment direction, into which a locking catch securing said locking device, in particular a resilient locking cam (4), snaps.

## Revendications

1. Appareil de chauffage ou de climatisation pour un véhicule automobile, comportant un dispositif de commande comprenant au moins un bouton de commande, en particulier un bouton rotatif (2), dont l'arbre de commande disposé du côté arrière, en particulier un arbre rotatif (2.2), aboutit à un panneau frontal (1) en traversant une ouverture, présentant la caractéristique suivante:
a) le bouton rotatif (2) est monté dans le panneau frontal (1) avec guidage radial et axial.

2. Appareil de chauffage ou de climatisation selon la revendication 1, présentant la caractéristique suivante:
b) le bouton rotatif (2) est en appui dans la direction axiale contre la face avant du panneau frontal (1) avec un montage à glissement;
c) l'arbre de commande (2.2), qui, de préférence, forme une seule pièce avec le bouton de commande (2), est inséré à travers une ouverture de palier (1.2) du panneau frontal (1) et est relié, sur la face arrière du panneau frontal (1), avec une rondelle antagoniste (3), qui est en appui axial avec un montage à glissement contre la face arrière du panneau frontal (1), de manière à fournir au moins un maintien axial et un entraînement tangentiel.

3. Appareil de chauffage ou de climatisation selon la revendication 2, présentant la caractéristique suivante:
d) l'arbre de commande (2.2) du bouton de commande (2) est accroché avec la rondelle antagoniste (3) dans la direction axiale d'insertion.

4. Appareil de chauffage ou de climatisation selon la revendications 3, présentant la caractéristique suivante:
e) l'arbre de commande (2.2) du bouton de commande (2) est réalisé sous la forme d'un manchon et est inséré, au moyen de tenons (2.5) de blocage ou d'entraînement faisant salle à partir du manchon, dans des ouvertures d'insertion (3.1) correspondantes de la rondelle antagoniste (3), de manière à fournir un blocage axial ou un entraînement tangentiel en rotation.

5. Appareil de chauffage ou de climatisation salon l'une quelconque des revendications 1 à 4, en particulier selon la revendication 4, présentant la caractéristique suivante:
f) l'arbre de commande (2.2) du bouton de commande (2) est entraîné en rotation avec la rondelle antagoniste (3) avec un jeu tangentiel.

6. Appareil de chauffage ou de climatisation selon au moins une quelconque des revendications 1 à 5, présentant la caractéristique suivante:
g) le bouton de commande (2) est monté à rotation dans le panneau frontal (1) indirectement sur la rondelle antagoniste (3) avec guidage axial ;
h) la rondelle antagoniste (3) est, du côté de la périphérie extérieure, en appui, par un bord de glissement (3.4) faisant saille axialement, contre la limitation de l'ouverture de palier (1.2) du panneau frontal (1)

7. Appareil de chauffage ou de climatisation selon au moins une quelconque des revendications 1 à 6, présentant la caractéristique suivante:
i) le bouton de commande (2) est en appui élastique en direction axiale avec compensation de tolérances par rapport à la rondelle antagoniste (3).

8. Appareil de chauffage ou de climatisation selon la revendications 7, présentant la caractéristique suivante:
j) la rondelle antagoniste (3), qui est, de préférence, fabriquée en matière synthétique, comporte des lames de ressort (3.3) qui sont réalisées en une seule pièce, qui font saillie axialement contre la face arrière du panneau frontal (1) et qui sont en appui élastique en contact avec glissement sur celui-ci.

9. Appareil de chauffage ou de climatisation selon au moins une quelconque des revendications 1 à 8, présentant la caractéristique suivante:
k) le bouton de commande (2) repose contre la face avant du panneau frontal (1) au moyen d'un anneau de glissement (2.4) faisant saillie axialement, en particulier avec un anneau de glissement présentant une garniture de glissement (2.41).

10. Appareil de chauffage ou de climatisation selon au moins une quelconque des revendications 1 à 9, présentant la caractéristique suivante:
l) la rondelle antagoniste (3) est munie d'un crantage de réglage (3.6) qui s'étend dans la direction de déplacement et dans lequel s'accroche un dispositif de blocage à accrochage assurant ce crantage, en particulier une came d'accrochage à ressort (4).
